# EUROPEAN PATENT APPLICATION

(11) **EP 3 171 650 A1**
(43) Date of publication of application: **24.05.2017**
(21) Application number: 14897850.5
(22) Date of filing: 14.07.2014
(51) Int. Cl.: H04W 72/04, H04W 16/14, H04W 72/08, H04W 92/18

(54) **WIRELESS COMMUNICATION SYSTEM**

(71) Applicant: Fujitsu Limited, Kawasaki-shi, Kanagawa 211-8588 (JP)
(72) Inventor: CHEN, Hongyang, Kawasaki-shi Kanagawa 211-8588 (JP)
(74) Representative: Hutchison, James
(86) International application number: PCT/JP2014/068721
(87) International publication number: WO 2016/009480

(57) **Abstract**

A wireless communication system includes: a plurality of terminal devices respectively configured to support D2D communication; and a base station configured to control the plurality of terminal devices, and provides a wireless communication service using a licensed band. The base station selects a terminal device from the plurality of terminal devices based on information received from the plurality of terminal devices, and transmits a measurement instruction that instructs measurement of a usage state of an unlicensed band to the selected terminal device. The selected terminal device measures a usage state for each sub-band in the unlicensed band according to the measurement instruction, and transmits a measurement result to the base station. The base station determines an available sub-band in the unlicensed band for D2D communication based on the measurement result, and transmits sub-band information that indicates the determined sub-band to a terminal device that performs D2D communication.

## Description

### <Technical Field>

The present invention is related to a wireless communication system that supports D2D (Device to Device) communication, and a base station and a terminal device used in the wireless communication system.

### <Background Art>

The 3GPP (Third Generation Partnership Project) discusses a standardization of mobile communication schemes. For example, high-speed wireless communication schemes such as LTE (Long Term Evolution) are standardized in 3GPP. In 3GPP release 12, D2D communication is discussed as a new wireless communication scheme. Note that D2D communication is an LTE extended specification and may be referred to as LTE Device-to-Device Proximity Services.

In D2D communication, a terminal device can directly communicate with another terminal device without transferring data via a base station. Thus, D2D communication is expected to provide communications with small delays. In addition, since D2D communication can be performed even in an area where a radio wave from a base station cannot reach (or an area where a base station does not exist), D2D communication may be useful for extending cell coverage. Furthermore, since D2D communication can be performed even when a base station is not working (for example, after an earthquake), D2D communication may be useful for providing communications in times of disasters. Note that a communication link established between terminal devices for D2D communication may be referred to as a D2D link.

D2D communication may be implemented by using a cellular communication system. That is, D2D communication may use resources (for example, radio frequencies) of the cellular communication system. When a plurality of D2D links are established, the same resource can be allocated to the plurality of D2D links. Accordingly, spectrum efficiency is high and precious resources are efficiently allocated to users in D2D communication.

However, when a plurality of D2D pairs perform communication at the same time, communication bands licensed to be dedicated to cellular communication systems (hereinafter "licensed band" or "L-band") may run short of demand. This problem may be solved if, for example, the same resources are allocated to a plurality of D2D links. However, when the same resources are allocated to D2D links that are close to each other, interference may occur between the D2D links.

With this background, a communication scheme in which a communication band that is not licensed to be dedicated to cellular communication systems (hereinafter "unlicensed band" or "U-band") and that is available in various wireless communication systems under the specified conditions is used for D2D communication is discussed.

### <Prior Art Document>

### <Patent Document>

Patent Document 1: WO2014/050557

### <Non-Patent Document>

Non-Patent Document 1: Overview of 3GPP Release 12 V0.1.2 (2014/03), 21.8 Study on LTE Device to Device Proximity Services

### <Summary of the Invention>

### <Problems Solved by the Invention>

However, since D2D communication is a new scheme, a method for providing D2D communication using unlicensed bands has not been sufficiently considered in 3GPP. That is, a method for providing D2D communication using unlicensed bands has not been determined. Note that this problem may arise not only in D2D communication described in 3GPP release 12, but also in any wireless communication system that supports direct communication between terminal devices.

It is an object of one aspect of the present invention to provide a method for efficiently performing D2D communication using unlicensed bands in a wireless communication system that supports D2D communication.

### <Means for Solving the Problem>

According to an aspect of the present invention, a wireless communication system includes: a plurality of terminal devices respectively configured to support D2D (Device to Device) communication; and a base station configured to control the plurality of terminal devices, and provides a wireless communication service using a specified licensed band. The base station selects a terminal device from the plurality of terminal devices based on information received from the plurality of terminal devices, and transmits a measurement instruction that instructs measurement of a usage state of an unlicensed band that is different from the licensed band to the selected terminal device. The selected terminal device measures a usage state for each sub-band in the unlicensed band according to the measurement instruction, and transmits a measurement result to the base station. The base station determines an available sub-band in the unlicensed band for D2D communication based on the measurement result received from the selected terminal device, and transmits sub-band information that indicates the determined sub-band to a terminal device that performs D2D communication.

### <Effect of the Invention>

According to the aspect, D2D communication using unlicensed bands can be efficiently performed.

### <Brief Description of Drawings>

FIG. 1 illustrates a configuration of a wireless communication system according to a first embodiment of the present invention.
FIG. 2 illustrates a licensed band and an unlicensed band.
FIG. 3 illustrates an example of a sequence for starting D2D communication using the unlicensed band.
FIG. 4 illustrates an example of a sequence for starting D2D communication using the unlicensed band in the wireless communication system according to the first embodiment.
FIG. 5(a) illustrates an example of a group management table and FIG. 5(b) illustrates an example of a sub-band management table.
FIG. 6 illustrates an example of a method for measuring a usage ratio of a sub-band.
FIG. 7 illustrates effects of the first embodiment.
FIG. 8 illustrates an example of a configuration of a base station used in the first embodiment.
FIG. 9 illustrates an example of a configuration of a terminal device used in the first embodiment.
FIG. 10 illustrates an example of a sequence for starting D2D communication using the unlicensed band in the wireless communication system according to the second embodiment.
FIG. 11 illustrates an example of a sequence for starting D2D communication using the unlicensed band in the wireless communication system according to the third embodiment.

### <Embodiments to Implement the Invention>

### <First Embodiment>

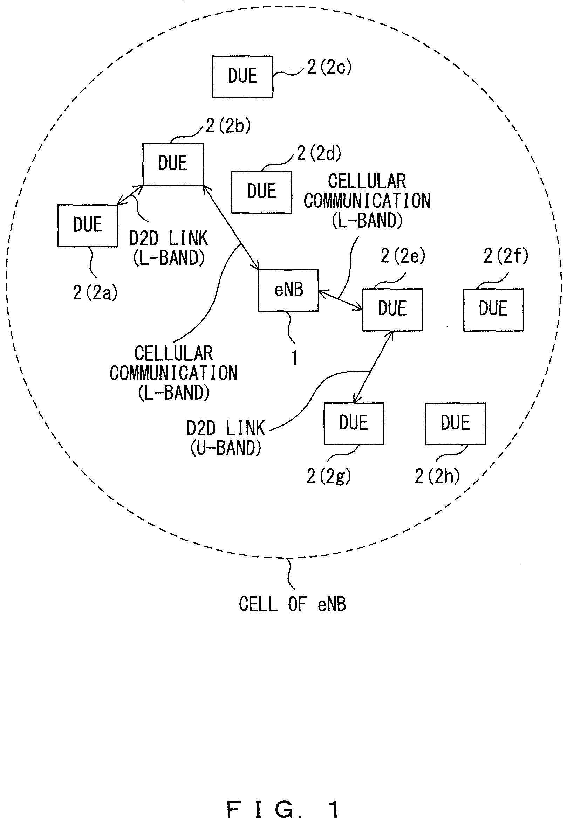

FIG. 1 illustrates a configuration of a wireless communication system according to a first embodiment of the present invention. The wireless communication system according to the first embodiment includes a base station 1 and a plurality of base stations 2 (2a-2h), as illustrated in FIG. 1.

The base station 1 is an eNB (evolved Node B) in this embodiment. eNB is a base station used in LTE. Thus, the base station 1 manages and controls cellular communication of LTE. That is, the base station 1 can receive data signals and control signals of cellular communication transmitted from a terminal device and process the received signals. In addition, the base station 1 can transmit data signals and control signals of cellular communication to a terminal device.

The base station 1 manages and controls D2D communication between terminal devices. That is, the base station 1 manages D2D links configured in a cell of the base station 1. For example, the base station 1 manages resources allocated to D2D links. As an example, the base station 1 can allocate respective Physical Resource Blocks (PRB) to D2D links. The Physical Resource Block is implemented by, for example, a radio frequency resource. In this case, the base station 1 can allocate respective radio frequencies to D2D links. In a case where D2D communication transmits signals in time division multiplexing, the base station 1 may allocate respective time slots to D2D links. Note that the Physical Resource Blocks are managed by frequency and time slot. In addition, the base station 1 can manage a position of each terminal device 2.

The terminal device (DUE: D2D User Equipment) 2 is configured to support cellular communication and D2D communication. That is, the terminal device 2 can transmit and receive data to/from another terminal device via the base station 1. In addition, the terminal device 2 can transmit and receive data directly to/from another terminal device via a D2D link without transferring data via the base station 1. Note that data transmitted by cellular communication or D2D communication may include audio data, image data, video data, text data and so on.

In the wireless communication system described above, available radio frequency bands are licensed, for example, by a government and so on. For example, available radio frequency bands are respectively allocated to communication carriers. In the following description, a radio frequency band licensed by a government and so on for cellular communication may be referred to as a "licensed band". The licensed band may be denoted by "L-band" for simplicity.

The terminal device 2 transmits a signal to the base station 1 and receives a signal from the base station 1 using the licensed band. In addition, the terminal device 2 can perform D2D communication with another terminal device 2 using the licensed band. For example, the terminal devices 2a and 2b perform D2D communication using the licensed band.

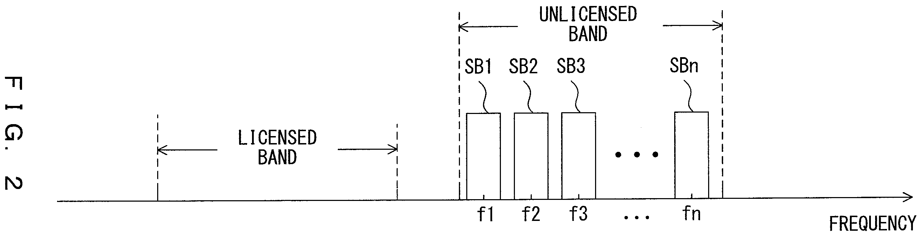

The terminal device 2 can also perform D2D communication with another terminal device 2 using an unlicensed band. For example, the terminal devices 2e and 2g perform D2D communication using an unlicensed band. Unlicensed bands are a different frequency band from licensed bands, as illustrated in FIG. 2. An unlicensed band is realized by, for example, a frequency band that is not licensed dedicated to any communication system, a frequency band that is available to the public for wireless equipment that satisfies a specified condition, and so on. Note that an unlicensed band may be denoted by "U-band" for simplicity.

When the wireless communication system according to the embodiments of the present invention uses an unlicensed band, a plurality of sub-bands are provided in the unlicensed band. In the example illustrated in FIG. 2, sub-bands SB1-SBn are provided in the unlicensed band. Radio frequencies of the sub-bands SB1-SBn are respectively f1-fn. Note that a plurality of sub-bands may also be provided in a licensed band, though they are not illustrated in the FIG. 2.

In the wireless communication system described above, the base station 1 manages D2D links established in the licensed band. However, the base station 1 does not necessarily manage D2D links established in the unlicensed band. Thus, when the terminal device 2 performs D2D communication using an unlicensed band, the terminal device 2 detects a usage state of the sub-bands in the unlicensed band. Upon detecting an available sub-band, the terminal device 2 starts D2D communication using the detected sub-band.

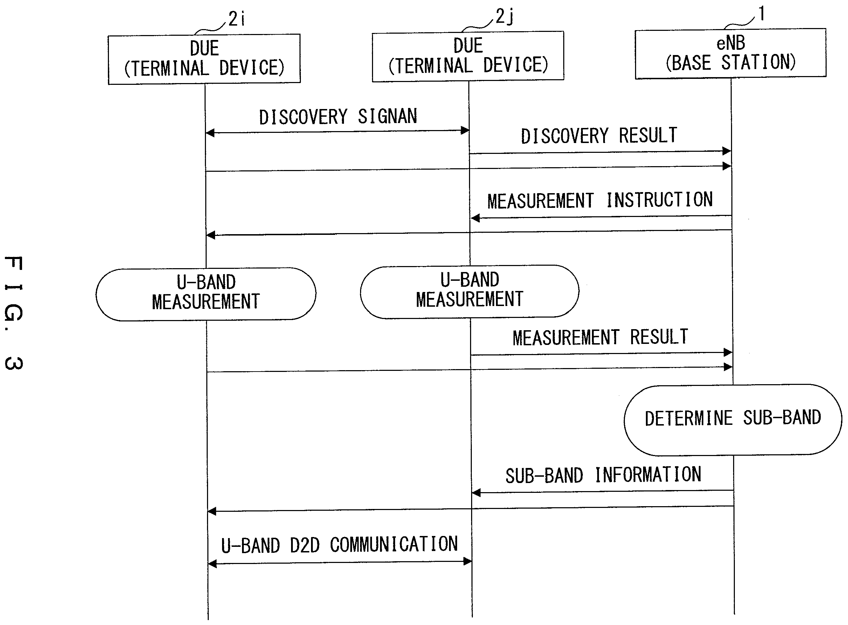

FIG. 3 illustrates an example of a sequence for starting D2D communication using an unlicensed band. In this example, D2D communication using the unlicensed band is performed between the terminal devices 2i and 2j.

The terminal devices 2i and 2j respectively transmit a discovery signal. The discovery signal is used for reporting an existence of a terminal device that generates the discovery signal to other terminal devices. Thus, a discovery signal carries a message including identification information of a source terminal device of the discovery signal. For example, a discovery signal transmitted from the terminal device 2i carries "terminal ID: 2i". Note that a sequence of the discovery signal is based on, for example, PRACH (Physical Random Access Channel), SRS (Sounding Reference Signal), and PSS (Primary Synchronization Signal) and/or SSS (Secondary Synchronization Signal). The message of the discovery signal is transmitted by using, for example, PUSCH (Physical Uplink Shared Channel).

The terminal devices 2i and 2j respectively report the discovery results to the base station 1. For example, upon receiving a discovery signal from the terminal device 2j, the terminal device 2i reports identification information of the terminal device 2j to the base station 1. Similarly, upon receiving a discovery signal from the terminal device 2i, the terminal device 2j reports identification information of the terminal device 2i to the base station 1. Then the base station 1 transmits a measurement instruction to measure a usage state of the unlicensed band to the terminal devices 2i and 2j.

The terminal devices 2i and 2j respectively measure usage states of each sub-band in the unlicensed band according to the measurement instructions received from the base station 1. Then the terminal devices 2i and 2j respectively transmit the measurement result to the base station 1. The base station 1 determines a sub-band allocated to D2D communication between the terminal devices 2i and 2j based on the measurement results received from the terminal devices 2i and 2j. Then the base station 1 reports the determined sub-band to the terminal devices 2i and 2j. The terminal devices 2i and 2j start D2D communication using the unlicensed band according to the report.

However, in the sequence illustrated in FIG. 3, communication overhead between the base station 1 and the terminal devices 2 is large and an amount of processing of the terminal devices 2 is large overall. That is, communication overhead for transmitting the measurement instruction from the base station 1 to the terminal devices 2, and communication overhead for transmitting the measurement result from the terminal devices 2 to the base station 1, are large. In addition, each of the terminal devices 2 measures the usage state of the unlicensed band. Thus, for example, if a remaining battery capacity of a terminal device 2 is small, the remaining time that the terminal device 2 can operate may be reduced by measuring the usage state of the licensed band.

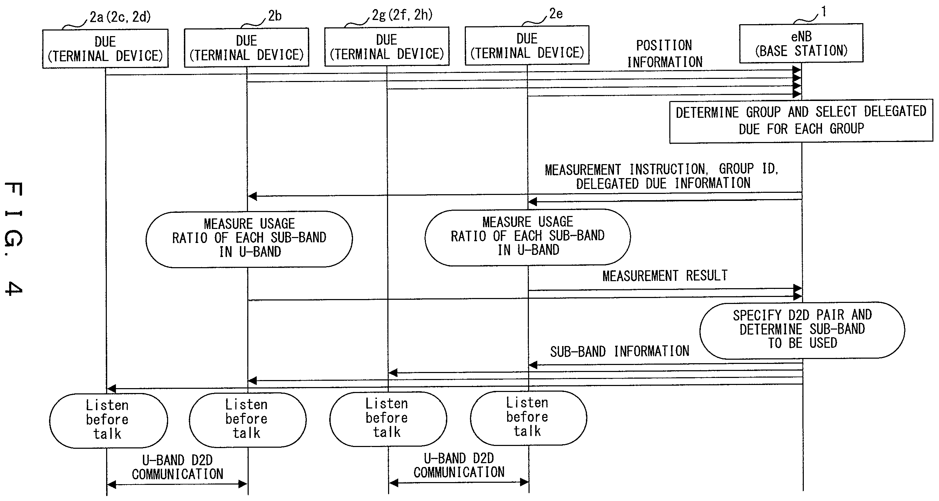

FIG. 4 illustrates an example of a sequence for starting D2D communication using the unlicensed band in the wireless communication system according to the first embodiment. According to this sequence, the problem illustrated in FIG. 3 may be solved.

In this example, the terminal devices 2a-2h are located in a cell of the base station 1, as illustrated in FIG. 1. The terminal devices 2a-2h respectively include GPS (Global Positioning System) devices. That is, each of the terminal devices 2a-2h can detect its position.

Each of the terminal devices 2a-2h generates position information by using the GPS device and transmits the position information to the base station 1. The position information is carried from each of the terminal devices 2a-2h to the base station 1 using the licensed band. By so doing, the base station 1 can detect the positions of the terminal devices 2a-2h. The base station 1 determines a group to which a plurality of terminal devices 2 located close to each other belong, based on the position information received from the terminal devices 2a-2h. In the example illustrated in FIG. 1, the terminal devices 2a-2d are grouped and the terminal devices 2e-2h are grouped. The base station 1 may determine a group in such a way that terminal devices located in a circle of a specified radius belong to the group. Alternatively, the base station 1 may determine a group in such a way that terminal devices located in a square of a specified size belong to the group.

The base station 1 assigns a group ID to each generated group. For example, "group ID: 1" is assigned to a group to which the terminal devices 2a-2d belong, and "group ID: 2" is assigned to a group to which the terminal devices 2e-2h belong. In addition, the base station 1 selects a delegated terminal device for each group. In this example, it is assumed that the terminal device 2b is selected from the terminal devices 2a-2d as a delegated terminal device delegated in group 1, and the terminal device 2e is selected from the terminal devices 2e-2h as a delegated terminal device delegated in group 2. Note that more than one delegated terminal device may be selected in one group.

When the base station 1 selects a terminal device from a specified group, the base station 1 may select a terminal device located at a center or near the center of an area where a plurality of terminal devices that belong to the group exist as a delegated terminal device. In this case, the base station 1 selects the delegated terminal device by using the position information received from the terminal devices. Alternatively, the base station 1 may select a terminal device that has a battery of a largest remaining battery capacity among a plurality of terminal devices that belong to the group as a delegated terminal device. In this case, the terminal devices 2a-2h respectively transmit battery information that indicates a remaining battery capacity together with the position information to the base station 1.

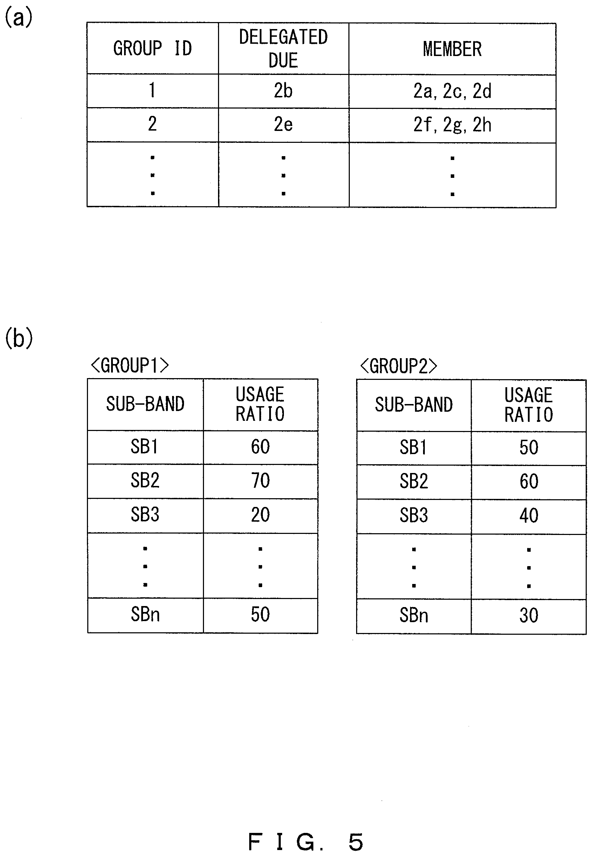

The base station 1 manages determined groups by using a group management table illustrated in FIG. 5 (a). In the group management table, a delegated terminal device and members of a group are registered with respect to a group ID.

The base station 1 transmits a measurement instruction to a selected delegated terminal device. In the example illustrated in FIG. 4, the measurement instruction is transmitted to the terminal devices 2b and 2e. The measurement instruction instructs measurement of a usage state of the unlicensed band. The measurement instruction may include a group ID and delegated terminal information. In this case, the measurement instruction to be transmitted to the terminal device 2b includes "group ID: 1" and "delegated terminal: 2b", and the measurement instruction to be transmitted to the terminal device 2e includes "group ID: 2" and "delegated terminal: 2e". Note that the measurement instruction is transmitted from the base station 1 to a delegated terminal device using the licensed band.

Upon receiving the measurement instruction, the delegated terminal device (here, the terminal device 2b, 2e) measures a usage state of the unlicensed band. Specifically, the delegated terminal device measures a usage ratio for each sub-band in the unlicensed band.

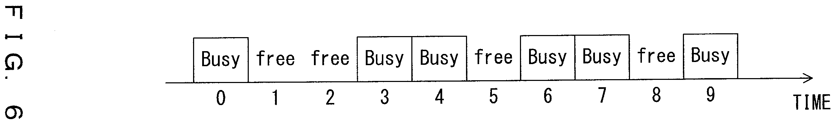

FIG. 6 illustrates an example of a method for measuring a usage ratio of a sub-band. In this example, a delegated terminal device performs carrier sensing a plurality of times for each sub-band in the unlicensed band. For example, when measuring a usage ratio of sub-band SB1 illustrated in FIG. 2, the delegated terminal device periodically senses received radio wave power at frequency f1. If the received radio wave power at frequency f1 is higher than or equal to a specified threshold, it is decided that sub-band SB1 is being used by another terminal device 2. On the other hand, if the received radio wave power at frequency f1 is lower than the threshold, it is decided that sub-band SB1 is not being used. In the example illustrated in FIG. 6, it is decided that a sub-band is being used (busy) at T0, T3, T4, T6, T7 and T9, and the sub-band is not being used (free) at T1, T2, T5 and T8. In this case, the delegated terminal device detects that the usage ratio of sub-band SB1 is 60 percent.

The delegated terminal device measures a usage ratio for each of the sub-bands in the unlicensed band in a similar method. Then the delegated terminal device transmits the measurement result to the base station 1. At this time, the delegated terminal device transmits a group ID together with the measurement result to the base station 1. Note that the measurement result is transmitted from the delegated terminal device to the base station 1 using the licensed band.

The base station 1 generates a sub-band management table based on the measurement result received from the delegated terminal device. The sub-band management table is generated for each group, as illustrated in FIG. 5(b). In the sub-band management table, a usage ratio for each sub-band measured by the delegated terminal device is recorded.

The base station 1 specifies a D2D pair and determines a sub-band to be allocated to the D2D pair. A D2D pair is configured by a pair of terminal devices 2 that perform D2D communication. The base station 1 may specify a D2D pair according to, for example, a request from a terminal device 2. Note that it is preferable that a D2D pair be configured within a group. In addition, a sub-band allocated to a specified D2D pair is determined based on a usage ratio of each of the sub-bands. For example, the base station 1 refers to the sub-band management table and allocates a sub-band with the lowest usage ratio to the specified D2D pair. In the example illustrated in FIG. 5(b), when a sub-band is allocated to a D2D pair in group 1, the base station 1 selects sub-band SB3. Note that the base station 1 may select a sub-band according to another policy. For example, the base station 1 may select one of sub-bands with a usage ratio that is lower than a specified threshold.

Then the base station 1 transmits band selecting information and sub-band information to terminal devices 2 that configure the specified D2D pair. The band selecting information indicates whether the unlicensed band is available. When a sub-band is selected in the unlicensed band as described above, band selecting information that indicates the unlicensed band is available is transmitted to the terminal devices 2. The sub-band information includes information that indicates a sub-band to be used by a D2D pair. In the example illustrated in FIG. 4, a D2D pair configured by the terminal devices 2a and 2b is specified in group 1, and a D2D pair configured by the terminal devices 2e and 2g is specified in group 2. In this case, the base station 1 transmits sub-band information that indicates a sub-band to be used by D2D communication between the terminal devices 2a and 2b to the terminal devices 2a and 2b. Similarly, the base station 1 transmits sub-band information that indicates a sub-band to be used by D2D communication between the terminal devices 2e and 2g to the terminal devices 2e and 2g.

Upon receiving the sub-band information from the base station 1, the terminal device 2 starts D2D communication using a sub-band in the unlicensed band indicated by the sub-band information. Note that the terminal device 2 may sense received radio wave power of the indicated sub-band in a "Listen before Talk" scheme prior to start of the D2D communication. In this case, if the received radio wave power is lower than a specified threshold, D2D communication using the unlicensed band will start.

When usage ratios of all sub-bands in the unlicensed band are higher than a specified threshold, the base station 1 may decide that D2D communication will be provided by using the licensed band (without using the unlicensed band). In this case, the base station 1 transmits to corresponding terminal devices 2 the band selecting information that indicates that the unlicensed band is not available and information that indicates a sub-band in the licensed band to be used. By so doing, the terminal devices 2 may perform D2D communication using the indicated sub-band in the licensed band.

As described above, in the first embodiment, only a delegated terminal device measures a usage state of the unlicensed band. Thus, according to a method of the first embodiment, power consumption in each terminal device (except for the delegated terminal device) may be reduced in a sequence to start D2D communication using the unlicensed band, as compared with a method illustrated in FIG. 3. In addition, communication overhead between the base station 1 and the terminal devices 2 is reduced.

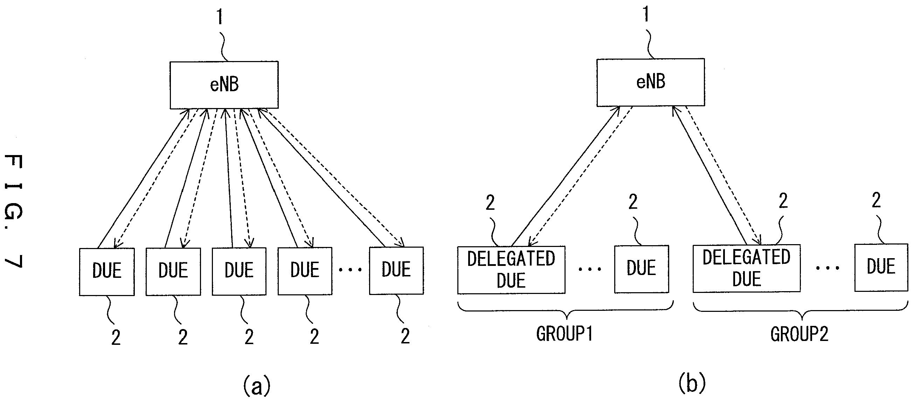

FIG. 7 illustrates effects of the first embodiment. In FIG. 7, a broken line represents a transmission of a measurement instruction, and a solid line represents a transmission of a measurement result.

In a case where D2D communication using the unlicensed band starts in the sequence illustrated in FIG. 3, the base station 1 transmits the measurement instruction to each of the terminal devices 2, as illustrated in FIG. 7(a). Then, each of the terminal devices 2 measures a usage state of the unlicensed band and transmits the measurement result to the base station 1.

On the other hand, in a case where D2D communication using the unlicensed band starts in the sequence according to the first embodiment, as illustrated in FIG. 7(b), the base station 1 transmits the measurement instruction only to a delegated terminal device selected for each group. Then only the delegated terminal device measures a usage state of the unlicensed band and transmits the measurement result to the base station 1. Thus, in the wireless communication system according to the first embodiment, communication overhead between the base station 1 and the terminal devices 2 is reduced.

Note that received radio wave power sensed by a terminal device 2 depends on a position of the terminal device 2 in the measurement of a usage state of the unlicensed band. For example, in the wireless communication system illustrated in FIG. 1, the received radio wave power sensed by the terminal device 2a may be different from the received radio wave power sensed by the terminal device 2b. Thus, it is preferable that all of the terminal devices 2 respectively perform the measurement in order to accurately detect the usage state of the unlicensed band for all of the terminal devices 2 in a cell of the base station 1.

In the first embodiment, only a delegated terminal device selected for each group measures the usage state of the unlicensed band. However, each group is configured by terminal devices 2 that are located closely to each other. In addition, it is expected that the received radio wave powers sensed by the terminal devices 2 that are located closely to each other are approximately the same. For example, in the wireless communication system illustrated in FIG. 1, it is expected that the received radio wave powers sensed by the terminal devices 2a-2d that are located closely to each other are approximately the same. Thus, if one terminal device (that is, a delegated terminal device) in a group performs the measurement, an accurate measurement result for each of the terminal devices in the group is obtained. Then the base station 1 can appropriately select a sub-band that is not frequently used by another terminal device (in other words, a sub-band in which a new D2D link can certainly be configured) and provide the selected sub-band to a specified D2D pair by referring to the accurate measurement result. Therefore, according to the first embodiment, if a delegated terminal device measures the usage state of the unlicensed band in a corresponding group, the base station 1 can appropriately allocate an available sub-band to a specified D2D pair in the group.

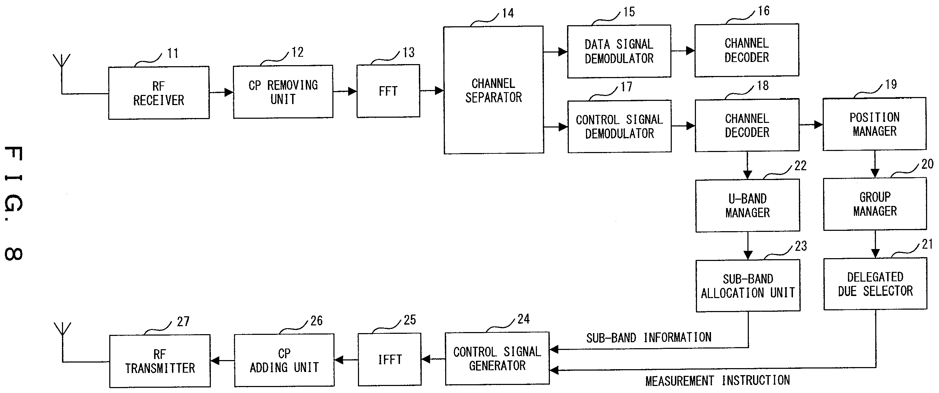

FIG. 8 illustrates an example of a configuration of a base station used in the first embodiment. The base station 1 includes an RF receiver 11, a CP removing unit 12, an FFT circuit 13, a channel separator 14, a data signal demodulator 15, a channel decoder 16, a control signal demodulator 17, a channel decoder 18, a position manager 19, a group manager 20, a delegated DUE selector 21, a U-band manager 22, a sub-band allocation unit 23, a control signal generator 24, an IFFT circuit 25, a CP adding unit 26, and an RF transmitter 27, as illustrated in FIG. 8. Note that the base station 1 may include other functions. For example, the base station 1 has a function to transmit a data signal to a terminal device 2, though it is not illustrated in the drawings.

The RF receiver 11 receives a cellular signal transmitted from the terminal device 2. The CP removing unit 12 removes a cyclic prefix (CP: Cyclic Prefix) from the received cellular signal. The FFT circuit 13 performs FFT (Fast Fourier Transform) on the received signal to generate a frequency-domain signal. The channel separator 14 separates the received signal in frequency domain into a data signal and a control signal.

The data signal demodulator 15 demodulates the received data signal to recover data. The channel decoder 16 decodes the recovered data. The control signal demodulator 17 demodulates the received control signal. The channel decoder 18 decodes the demodulated control signal to recover control information. The control information includes position information that indicates a position of a terminal device 2. In addition, the control information includes measurement result information that indicates a measurement result with respect to a usage state of the unlicensed band obtained by a delegated terminal device.

The position manager 19 manages positions of the terminal devices 2 based on position information respectively received from the terminal devices 2. The group manager 20 groups the terminal devices 2 located in a cell of the base station 1 based on positions of the terminal devices 2. The delegated DUE selector 21 selects a delegated terminal device for each group. The delegated terminal device is selected based on, for example, positions of the terminal devices 2 or remaining battery capacities of the terminal devices 2. Then the delegated DUE selector 21 generates a measurement instruction to perform a measurement of a usage state of the unlicensed band. A destination of the measurement instruction is the delegated terminal device. Note that the group management table illustrated in FIG. 5(a) is generated by the group manager 20 and the delegated DUE selector 21.

The U-band manager 22 manages usage ratios of sub-bands in the unlicensed band based on the measurement result information received from the delegated terminal device. It is preferable that the usage ratios of sub-bands be managed for each group. Note that the sub-band management table illustrated in FIG. 5 (b) is generated by the U-band manager 22. The sub-band allocation unit 23 refers to the sub-band management table and allocates an available sub-band in the unlicensed-band to a terminal device 2 that requests D2D communication. For example, the sub-band allocation unit 23 allocates a sub-band with the lowest usage ratio to a D2D pair. Alternatively, the sub-band allocation unit 23 may allocate a sub-band that is randomly selected from a plurality of sub-bands with a usage ratio lower than a specified threshold to a D2D pair. Then the sub-band allocation unit 23 generates sub-band information that indicates the sub-band in the unlicensed band to be used by the D2D pair.

The control signal generator 24 transmits a control signal to the terminal device 2 using a PDCCH (Physical Downlink Control Channel), for example. The measurement instruction generated by the delegated DUE selector 21 and the sub-band information generated by the sub-band allocation unit 23 are transmitted to the terminal device 2 by the control signal generator 24.

The IFFT circuit 25 performs IFFT (Inverse Fast Fourier Transform) on the control signal and the data signal that is not illustrated to generate a time-domain signal. The CP adding unit 26 adds a cyclic prefix to the time-domain signal output from the IFFT circuit 25. The RF transmitter 27 transmits a cellular signal via an antenna.

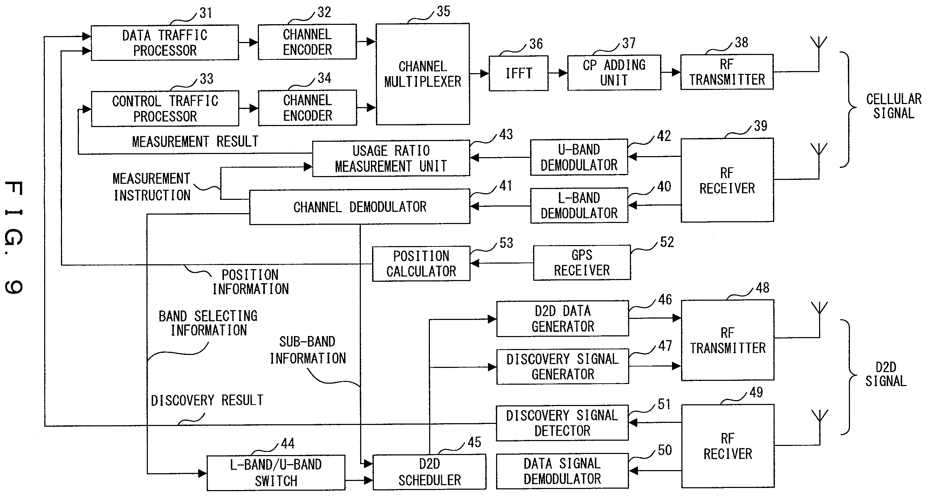

FIG. 9 illustrates an example of a configuration of a terminal device used in the first embodiment. The terminal device 2 supports cellular communication and D2D communication as described above. Note that the terminal device 2 may include other functions not illustrated in FIG. 9.

In order to support cellular communication, the terminal device 2 includes a data traffic processor 31, a channel encoder 32, a control traffic processor 33, a channel encoder 34, a channel multiplexer 35, an IFFT circuit 36, a CP adding unit 37, an RF transmitter 38, an RF receiver 39, an L-band demodulator 40, a channel demodulator 41, a U-band demodulator 42, and a usage ratio measurement unit 43.

The data traffic processor 31 generates data traffic transmitted in cellular communication. When the position information is generated by a position calculator 53, the data traffic processor 31 sets the position information in the data traffic. When the discovery result is fed from a discovery signal detector 51, the data traffic processor 31 sets the discovery result in the data traffic. The channel encoder 32 encodes the data traffic output from the data traffic processor 31.

The control traffic processor 33 generates control traffic transmitted in cellular communication. When the measurement result is fed from the usage ratio measurement unit 43, the control traffic processor 33 sets the measurement result in the control traffic. The channel encoder 34 encodes the control traffic output from the control traffic processor 33.

The channel multiplexer 35 multiplexes the data channel and the control channel. The IFFT circuit 36 performs IFFT on an output signal of the channel multiplexer 35 to generate a time-domain signal. The CP adding unit 37 adds a Cyclic Prefix to the time-domain signal output from the IFFT circuit 36. The RF transmitter 38 transmits a cellular signal via an antenna. Note that the RF transmitter 38 can transmit a signal in the licensed band and a signal in the unlicensed band.

The RF receiver 39 receives a cellular signal transmitted from the base station 1. Note that the RF receiver 39 can receive a signal in the licensed band and a signal in the unlicensed band. A received cellular signal in the licensed band is guided to the L-band demodulator 40, and a received cellular signal in the unlicensed band is guided to the U-band demodulator 42. The L-band demodulator 40 demodulates the received cellular signal in the licensed band. The channel demodulator 41 demodulates a PDSCH (Physical Downlink Shared Channel) and PDCCH in the cellular signal in the licensed band obtained by the L-band demodulator 40.

When the channel demodulator 41 obtains the measurement instruction transmitted from the base station 1, the channel demodulator 41 gives it to the usage ratio measurement unit 43. When the channel demodulator 41 obtains the band selecting information transmitted from the base station 1, the channel demodulator 41 gives it to an L-band/U-band switch 44. When the channel demodulator 41 obtains the sub-band information transmitted from the base station 1, the channel demodulator 41 gives it to a D2D scheduler 45.

The U-band demodulator 42 demodulates a received signal in the unlicensed band. When the measurement instruction is fed from the channel demodulator 41, the usage ratio measurement unit 43 measures a usage state of the unlicensed band. For example, the usage ratio measurement unit 43 measures a usage ratio for each of the sub-bands in the unlicensed band by periodically sensing received radio wave powers of the sub-bands. The measurement result is given to the control traffic processor 33 as described above. Note that the measurement instruction is not given to all terminal devices 2, but only to a delegated terminal device. Accordingly, the usage state of the unlicensed band is measured only in a terminal device 2 that is selected as a delegated terminal device.

In order to support D2D communication, the terminal device 2 includes the L-band/U-band switch 44, the D2D scheduler 45, a D2D data generator 46, a discovery signal generator 47, an RF transmitter 48, an RF receiver 49, a data signal demodulator 50, and a discovery signal detector 51.

The L-band/U-band switch 44 selects a band (licensed band or unlicensed band) for D2D communication based on the band selecting information transmitted from the base station 1. The D2D scheduler 45 can determine a resource for use in D2D communication within resources provided by the wireless communication system or resources prepared in advance. For example, upon receiving the sub-band information from the base station 1, the D2D scheduler 45 controls the D2D data generator 46 and/or the RF transmitter 48 in such a way that a D2D signal is transmitted in the sub-band indicated by the sub-band information. Note that the D2D scheduler 45 may control the RF receiver 49 and/or the data signal demodulator 50 in such a way that a D2D signal is received in the indicated sub-band.

The D2D data generator 46 generates transmission data of D2D communication under the control of the D2D scheduler 45. The discovery signal generator 47 generates the discovery signal. The discovery signal carries identification information of the terminal device itself. The RF transmitter 48 transmits D2D signals (including a D2D data signal and discovery signal) via an antenna. Note that the RF transmitter 48 can transmit a D2D signal in the licensed band and a D2D signal in the unlicensed band.

The RF receiver 49 receives D2D signals (including a D2D data signal and discovery signal) transmitted from another terminal device 2. Note that the RF receiver 49 can receive a D2D signal in the licensed band and a D2D signal in the unlicensed band. The data signal demodulator 50 demodulates the received D2D signal to recover D2D data.

The discovery signal detector 51 detects a discovery signal in D2D signals transmitted from another terminal device 2. Then the discovery signal detector 51 generates a discovery result including identification information of a source terminal device of the discovery signal. The discovery result is fed to the data traffic processor 31 as described above.

The terminal device 2 further includes a GPS receiver 52 and the position calculator 53. The GPS receiver 52 receives GPS signals. The position calculator 53 calculates a position of the terminal device itself based on the GPS signals received by the GPS receiver 52. The position information that indicates a position of the terminal device itself is fed to the data traffic processor 31 as described above.

As the foregoing description, in the wireless communication system according to the first embodiment, the measurement of a usage state of the unlicensed band is not performed respectively by all terminal devices but only by a delegated terminal device selected for each group. Then an available sub-band in the unlicensed band is determined based on the measurement result, and D2D communication is performed using the sub-band. Thus, the number of terminal devices 2 that measure the usage state of the unlicensed band is small, and communication overhead between the base station 1 and the terminal devices 2 is also small. Note that the delegated terminal device is selected in a group configured by terminal devices 2 that are located close to each other. Accordingly, an error in measurement of a usage state of the unlicensed band is small.

### <Second Embodiment>

In the first embodiment, terminal devices 2 are grouped based on the position information of the terminal devices 2, and a delegated terminal device is selected for each group. However, the present invention is not limited to this method. That is to say, the terminal devices 2 may be grouped by another method. In the wireless communication system according to the second embodiment, the terminal devices 2 are grouped based on results of discovery performed between the terminal devices 2.

The terminal devices 2 respectively broadcast a discovery signal. The discovery signal is used for reporting an existence of a terminal device that generates the discovery signal to other terminal devices as described above. Thus, the discovery signal carries a message including identification information of a source terminal device of the discovery signal. For example, a discovery signal transmitted from the terminal device 2i carries "terminal ID: 2i".

Upon receiving a discovery signal, the terminal device 2 transmits identification information of a source terminal device of the discovery signal to the base station 1 as a discovery result. For example, in the wireless communication system illustrated in FIG. 1, it is assumed that the terminal device 2a receives discovery signals respectively from the terminal devices 2b, 2c and 2d. In this case, the discovery result transmitted from the terminal device 2a to the base station 1 is denoted by "Terminal device 2a: 2b, 2c, 2d" in the following description.

In the following example, it is assumed that the base station 1 receives discovery results below from the terminal devices 2a-2h.
Terminal device 2a: 2b, 2c, 2d
Terminal device 2b: 2a, 2c, 2d
Terminal device 2c: 2a, 2b, 2d
Terminal device 2d: 2a, 2b, 2c, 2e
Terminal device 2e: 2d, 2f, 2g, 2h
Terminal device 2f: 2e, 2g, 2h
Terminal device 2g: 2e, 2f, 2h
Terminal device 2h: 2e, 2f, 2g

When each terminal device among a plurality of terminal devices receives discovery signals respectively from all other terminal devices, the base station 1 groups the plurality of terminal devices. For example, if the terminal devices 2a-2d are interested, the terminal device 2a receives discovery signals respectively from all other terminal devices (2b, 2c, 2d), the terminal device 2b receives discovery signals respectively from all other terminal devices (2a, 2c, 2d), the terminal device 2c receives discovery signals respectively from all other terminal devices (2a, 2b, 2d), and the terminal device 2d receives discovery signals respectively from all other terminal devices (2a, 2b, 2c). Here, when a discovery signal transmitted from a terminal device is received by another terminal device, it may be decided that the terminal devices are located close to each other. In the foregoing case, it may be considered that the terminal devices 2a-2d are located close to each other. Thus, the base station 1 groups the terminal devices 2a-2d. Similarly, the terminal devices 2e-2h are grouped by the base station 1.

Note that, in the foregoing example, the terminal device 2d receives a discovery signal not only from the terminal devices 2a-2c but also from the terminal device 2e. That is to say, it may be considered that the terminal devices 2d and 2e are located close to each other. However, the terminal devices 2a, 2b and 2c do not receive a discovery signal from the terminal device 2e. In other words, it is considered that the terminal device 2e is located far from the terminal devices 2a, 2b and 2c. Thus, in this case, the terminal device 2e does not belong to the group configured by the terminal devices 2a-2d.

When the terminal device 2 transmits identification information of a source terminal device of the discovery signal to the base station 1 as a discovery result, the terminal device 2 may transmit only identification information of a source terminal device of the discovery signal whose received power is higher than a specified threshold to the base station 1. According to this method, it is possible to specify a group more correctly. In another method, when the terminal device 2 transmits identification information of a source terminal device of the discovery signal to the base station 1 as a discovery result, the terminal device 2 may include information that indicates an intensity of the received discovery signal in the discovery result. In this case, the base station 1 may also specify a group with reference to the signal intensity.

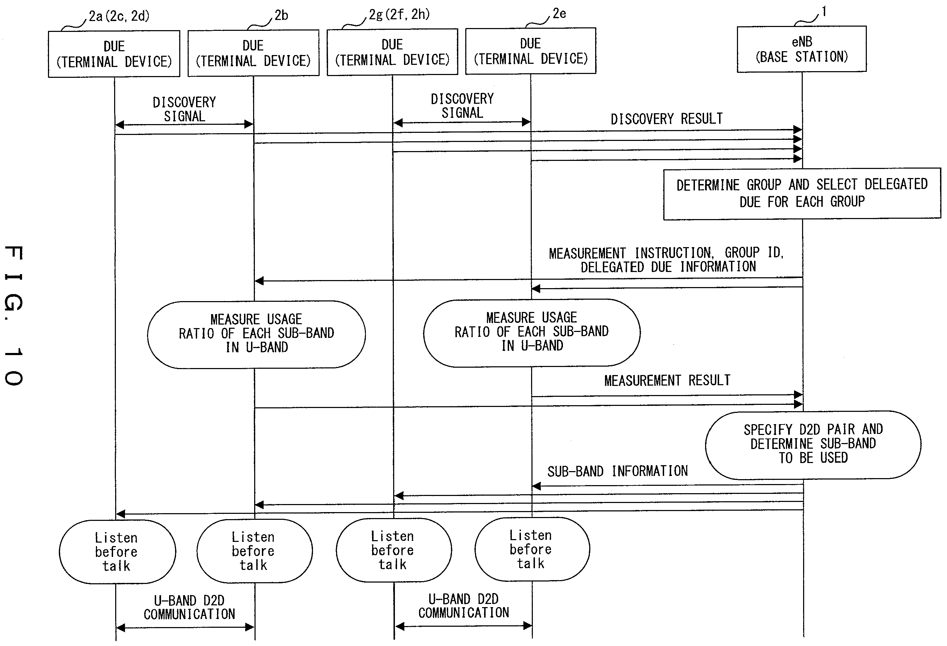

FIG. 10 illustrates an example of a sequence for starting D2D communication using the unlicensed band in the wireless communication system according to the second embodiment. In the second embodiment, results of the discovery performed between the terminal devices 2 are transmitted respectively from the terminal devices 2 to the base station 1. Then, the base station 1 groups the terminal devices 2 based on the discovery results received from the terminal devices 2. The following sequence is substantially the same between the first embodiment and the second embodiment, thus the explanations of the sequence is omitted.

Note that, in the second embodiment, the position manager 19 and the group manager 20 illustrated in FIG. 8 group the terminal devices 2 based on discovery results received from the terminal devices 2. In addition, the terminal device 2 does not have to include the GPS receiver 52 and the position calculator 53 illustrated in FIG. 9.

As described above, in the second embodiment, the terminal devices are grouped and a delegated terminal device is selected by using a discovery signal. That is, it is possible to efficiently perform a sequence to start D2D communication using the unlicensed band even if the terminal device 2 is not equipped with a GPS receiver.

### <Third Embodiment>

In the first and second embodiments, a delegated terminal device that is selected by the base station from among a plurality of terminal devices measures a usage state of the unlicensed band. However, there is a demand for a user to have D2D communication outside a cell of the base station. In addition, D2D communication is a useful communication scheme in an environment where the base station is not available due to such as disaster. Accordingly, in the third embodiment, D2D communication using the unlicensed band is configured without control of a base station.

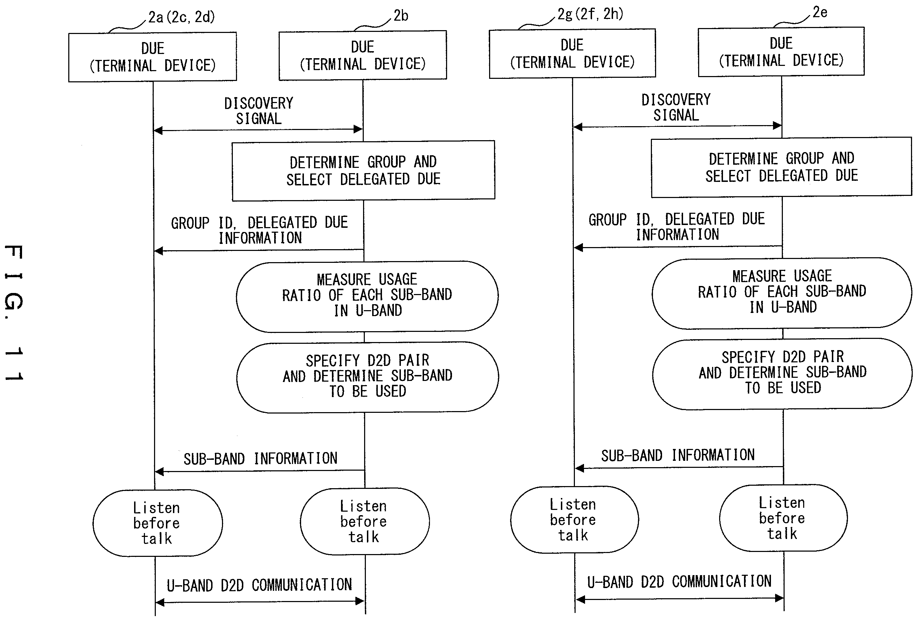

FIG. 11 illustrates an example of a sequence for starting D2D communication using the unlicensed band in the wireless communication system according to the third embodiment. Note that the base station 1 may exist or may not exist. In any case, sub-band allocation in the unlicensed band may be performed without an intervention of the base station 1.

Similarly to the second embodiment, the terminal devices 2 respectively broadcast the discovery signal. Then the terminal devices 2 are grouped based on results of the discovery, and a delegated terminal device is selected for each group. In this case, for example, each of the terminal devices may broadcast the discovery result. At this time, information that indicates a remaining battery capacity is broadcasted together with the discovery result. By so doing, the discovery results of the terminal devices 2 and the information that indicates a remaining battery capacity of each of the terminal devices 2 are shared by the terminal devices 2. Thus, the terminal device 2 can group the terminal devices in a similar method as the second embodiment. In addition, for example, the terminal device 2 receives information that indicates remaining battery capacities of other terminal devices in the group and compares the remaining battery capacities of other terminal devices with the remaining battery capacity of the terminal device 2 itself. If the remaining battery capacity of the terminal device 2 itself is the largest or a rank of the remaining battery capacity of the terminal device 2 itself is higher than a specified rank, the terminal device 2 selects the terminal device 2 itself as a delegated terminal device.

Note that the terminal device 2 may group the terminal devices based on positions of each of the terminal devices and select the delegated terminal device for each group. In this case, for example, each of the terminal devices 2 broadcasts its position information. In addition, a terminal device located at a center or near the center of an area where a plurality of terminal devices that belong to a corresponding group exist may be selected as a delegated terminal device.

The delegated terminal device transmits a group ID and information that identifies the delegated terminal device to each of the terminal devices 2 in the group. In addition, the delegated terminal device measures a usage ratio for each sub-band in the unlicensed band. Furthermore, the delegated terminal device determines a sub-band to be allocated to a D2D pair based on the measurement result with respect to the usage ratios of the sub-bands. Note that a method in which the delegated terminal device determines a sub-band to be allocated to a D2D pair in the third embodiment may be substantially the same as the method in which the base station 1 determines a sub-band to be allocated to a D2D pair in the first or second embodiment. That is to say, the sub-band information is generated by the delegated terminal device.

Then the delegated terminal device transmits the sub-band information to terminal devices 2 that perform D2D communication. The sub-band information indicates a sub-band that is available for the terminal devices 2 that perform D2D communication. Thereafter, D2D communication using a specified sub-band in the unlicensed band will start.

As described above, in the third embodiment, it is possible to efficiently perform a sequence to start D2D communication using the unlicensed band even in an area where there is no base station 1 or the base station 1 is not available.

### <Fourth Embodiment>

The fourth embodiment relates to communications between the base station 1 and a cellular terminal (CUE: Cellular User Equipment). In the fourth embodiment, downlink communication or uplink communication between the base station 1 and a cellular terminal may use the unlicensed band. For example, in uplink communications, a cellular terminal senses radio waves in the unlicensed band before transmitting uplink data to the base station 1. Here, the usage state of the unlicensed band is approximately constant in a specified area. Thus, similar to the first through third embodiments, the cellular terminals located within the area may be grouped. After grouping, the base station 1 transmits a group ID and identification information of a delegated cellular terminal to the cellular terminals in the group. By so doing, the delegated cellular terminal measures a usage ratio of the unlicensed band for the cellular terminals in the group. Then the delegated cellular terminal reports the measurement result of the usage ratio of the unlicensed band to the base station 1.

When the base station 1 wants to communicate with one of the cellular terminals in the group using the unlicensed band, the base station transmits control information to the cellular terminal via PDCCH. The control information is transmitted via the licensed band. In addition, the control information indicates detection of a sub-band determined based on the previously measured usage ratio of the unlicensed band. Therefore, when the cellular terminal starts communication using the unlicensed band, it is not necessary to sense all of the sub-bands in the unlicensed band.

## Claims

1. A wireless communication system that provides a wireless communication service using a specified licensed band, the system comprising:
a plurality of terminal devices respectively configured to support D2D (Device to Device) communication; and
a base station configured to control the plurality of terminal devices, wherein
the base station selects a terminal device from the plurality of terminal devices based on information received from the plurality of terminal devices, and transmits a measurement instruction that instructs measurement of a usage state of an unlicensed band that is different from the licensed band to the selected terminal device,
the selected terminal device measures a usage state for each sub-band in the unlicensed band according to the measurement instruction, and transmits a measurement result to the base station, and
the base station determines an available sub-band in the unlicensed band for D2D communication based on the measurement result received from the selected terminal device, and transmits sub-band information that indicates the determined sub-band to a terminal device that performs D2D communication.

2. The wireless communication system according to claim 1, wherein
the plurality of terminal devices respectively transmit position information that indicates its position to the base station, and
the base station generates a group to which terminal devices that are located close to each other belong based on the position information received from the plurality of terminal devices, and selects the terminal device that measures the usage state from the terminal devices in the group.

3. The wireless communication system according to claim 2, wherein
the base station selects a terminal device located at a center or near the center of an area where the terminal devices that belong to the group exist as the terminal device that measures the usage state.

4. The wireless communication system according to claim 1, wherein
the plurality of terminal devices respectively transmit a discovery signal that indicates an existence of a terminal device,
the plurality of terminal devices respectively transmit discovery result information that indicates a reception state of the discovery signal transmitted from another terminal device to the base station, and
the base station generates a group to which terminal devices that are located close to each other belong based on the discovery result information received from the plurality of terminal devices, and selects the terminal device that measures the usage state from the terminal devices in the group.

5. The wireless communication system according to claim 2 or 4, wherein
the plurality of terminal devices respectively transmit information that indicates a remaining battery capacity of local batteries, and
the base station selects a terminal device with a large remaining battery capacity from the terminal devices in the group as the terminal device that measures the usage state.

6. The wireless communication system according one of claims 1-5, wherein
the selected terminal device performs of carrier sensing a plurality of times for each of the sub-bands in the unlicensed band to measure a usage ratio for each of the sub-bands, and transmits the measurement result to the base station.

7. The wireless communication system according to claim 6, wherein
the base station transmits the sub-band information that indicates a sub-band with a low usage ratio to the terminal device that performs D2D communication.

8. The wireless communication system according to claim 6, wherein
the base station transmits the sub-band information that indicates a sub-band selected from sub-bands with a usage ratio lower than a specified threshold to the terminal device that performs D2D communication.

9. A wireless communication system that includes a plurality of terminal devices respectively configured to support D2D (Device to Device) communication and that provides a wireless communication service using a specified licensed band, wherein
a terminal device is selected from a group to which terminal devices that are located close to each other belong,
the selected terminal device measures a usage state for each sub-band in an unlicensed band that is different from the licensed band, and
the selected terminal device determines an available sub-band in the unlicensed band for D2D communication based on the measurement result, and transmits sub-band information that indicates the determined sub-band to another terminal device that performs D2D communication.

10. The wireless communication system according to claim 9, wherein
a terminal device located at a center or near the center of an area where the terminal devices that belong to the group exist is selected as the terminal device that measures the usage state.

11. The wireless communication system according to claim 9, wherein
a terminal device with a large remaining battery capacity is selected from the terminal devices in the group as the terminal device that measures the usage state.

12. A base station used in a wireless communication system that includes a plurality of terminal devices respectively configured to support D2D (Device to Device) communication and that provides a wireless communication service using a specified licensed band, the base station comprising:
a terminal device selector adapted to select a terminal device from the plurality of terminal devices based on information received from the plurality of terminal devices, and to transmit a measurement instruction that instructs measurement of a usage state of an unlicensed band that is different from the licensed band to the selected terminal device; and
a sub-band allocation unit adapted to determine an available sub-band in the unlicensed band for D2D communication based on a usage state of each of the sub-bands in the unlicensed band measured by the selected terminal device, and to transmit sub-band information that indicates the determined sub-band to a terminal device that performs D2D communication.

13. A terminal device used in a wireless communication system that includes a plurality of terminal devices respectively configured to support D2D (Device to Device) communication and that provides a wireless communication service using a specified licensed band, the terminal device comprising:
a measurement unit adapted to measure a usage state for each sub-band in an unlicensed band that is different from the licensed band when the terminal device is selected from terminal devices located close to each other by a base station as a delegated terminal device that measures the usage state of the unlicensed band; and
a transmission unit adapted to transmit a measurement result obtained by the measurement unit to the base station.

14. A wireless communication control method performed by a base station in a wireless communication system that includes a plurality of terminal devices respectively configured to support D2D (Device to Device) communication and that provides a wireless communication service using a specified licensed band, the method comprising:
selecting a terminal device from the plurality of terminal devices based on information received from the plurality of terminal devices;
transmitting a measurement instruction that instructs measurement of a usage state of an unlicensed band that is different from the licensed band to the selected terminal device;
determining an available sub-band in the unlicensed band for D2D communication based on a usage state of each of the sub-bands in the unlicensed band measured by the selected terminal device; and
transmitting sub-band information that indicates the determined sub-band to a terminal device that performs D2D communication.

15. A wireless communication control method performed by a terminal device in a wireless communication system that includes a plurality of terminal devices respectively configured to support D2D (Device to Device) communication and that provides a wireless communication service using a specified licensed band, the method comprising:
measuring a usage state for each sub-band in an unlicensed band that is different from the licensed band when the terminal device is selected from terminal devices located close to each other by a base station as a delegated terminal device that measures the usage state of the unlicensed band; and
transmitting a measurement result obtained by the measurement to the base station.

16. A wireless communication system that includes a base station and a plurality of cellular terminals that are respectively available for using a licensed band and an unlicensed band, wherein
a cellular terminal selected from the plurality of cellular terminals measures a usage ratio of each sub-band in the unlicensed band, and transmits a measurement result to the base station, and
the base station transmits control information that instructs detection of a sub-band determined based on the measurement result to a corresponding cellular terminal with which communication using the unlicensed band is performed via Physical Downlink Control Channel established in the licensed band.
